(19) Europäisches Patentamt
European Patent Office
Office européen des brevets

(11) **EP 1 890 545 B1**

(12) **EUROPEAN PATENT SPECIFICATION**

(45) Date of publication and mention of the grant of the patent:
**31.10.2012 Bulletin 2012/44**

(51) Int Cl.:
*A01N 59/26* (2006.01)     *A01N 59/20* (2006.01)
*A01N 25/00* (2006.01)

(21) Application number: **06753988.2**

(22) Date of filing: **29.05.2006**

(86) International application number:
**PCT/EP2006/005157**

(87) International publication number:
**WO 2006/128677 (07.12.2006 Gazette 2006/49)**

(54) **SYNERGISTIC FUNGICIDAL COMPOSITIONS**

SYNERGISTISCHE FUNGIZIDE ZUSAMMENSETZUNGEN

COMPOSITIONS FONGICIDES SYNERGIQUES

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.05.2005 IT MI20051019**

(43) Date of publication of application:
**27.02.2008 Bulletin 2008/09**

(73) Proprietor: **ISAGRO S.p.A.**
**20153 Milano (IT)**

(72) Inventors:
• **FILIPPINI, Lucio**
**I-20097 San Donato Milanese (IT)**

• **GUSMEROLI, Marilena**
**I-20052 Monza (IT)**
• **MORMILE, Silvia**
**I-28100 Novara (IT)**
• **GARAVAGLIA, Carlo**
**I-20012 Cuggiono (IT)**
• **MIRENNA, Luigi**
**I-20139 Milano (IT)**

(74) Representative: **Bottero, Carlo et al**
**Barzanò & Zanardo Milano S.p.A.**
**Via Borgonuovo, 10**
**20121 Milano (IT)**

(56) References cited:
**EP-A2- 0 230 209    WO-A2-2004/047540**
**US-A- 4 075 324**

**Description**

The present invention relates to synergistic fungicidal compositions.

In particular, the present invention relates to new synergistic compositions capable of controlling phytopathogens which cause considerable economic damage to agricultural crops.

More specifically, the present invention also relates to the use of compositions comprising mixtures based on a copper (II) salt of phosphorous acid, also called phosphite or phosphonate, with at least another metallic salt of phosphorous acid and the use of compositions comprising mixtures based on a copper (II) salt of phosphorous acid, also called phosphite or phosphonate, mixed with at least another selected salt of a metal of phosphorous acid.

The use of salts of phosphorous acid as fungicides is generally known in literature, for example in American patent US 4,075,324.

EP0230209 discloses synergistic fungicidal compositions comprising acylalanine fungicides and phosphorous acid salts.

The Applicant has now surprisingly found that copper (II) salts of phosphorous acid are capable of exerting a considerable synergistic effect allowing a higher fungicidal activity to be obtained, than that envisaged on the basis of the activities of single components, when applies in composition with other selected metal salts of phosphorous acid.

As resistance phenomena can arise in nature as a result of prolonged treatment with systemic fungicides, it is always important and necessary to find synergies oriented towards anti-resistance strategies.

More specifically, the Applicant has now surprisingly found that mixtures based on copper (II) salts of phosphorous acid and one or more selected metal salts of phosphorous acid have a considerable synergistic effect, allowing a higher fungicidal activity to be obtained than that envisaged on the basis of the activities of single components and are capable of effectively controlling numerous diseases which can cause damage to crops of great economic interest, such as, vines, potatoes and tobacco.

Said mixtures also have an excellent toxicological and environmental profile, as well as the advantage of having a wider range of use and allowing the dosages of use of copper and also, possibly, of phosphorous acid, to be reduced.

An object of the present invention therefore relates to a synergistic fungicidal composition consisting of mixtures comprising a copper (II) salt of phosphorous acid and at least another metallic salt of phosphorous acid selected from a salt of an alkaline-earth metal, or a salt of Fe, Mn, Zn, Ni, Al or Ti .

Said mixtures comprising a copper (II) salt of phosphorous acid and at least another metallic salt of phosphorous acid, can be obtained either by mixing the single salts, or by co-precipitation of said salts in a reaction mixture; in both cases, in the above mixture, the copper (II) salt of phosphorous acid and the other metallic salts of phosphorous acid can be present in any proportion, solvation state, structure and crystalline lattice composition.

The salts of an alkaline-earth metal, or salts of Fe, Mn, Zn, Ni, Al or Ti of phosphorous acid can be mono- or dibasic, or they can be mixtures of these in any proportion.

Preferred fungicidal compositions according to the present invention can be selected from

   • Mixture 1: $CuHPO_3$ + $CaHPO_3$ (50:50)
   • Mixture 2: $CuHPO_3$ + $ZnHPO_3$ (50:50)
   • Mixture 3: $CuHPO_3$ + $MnHPO_3$ (50:50)
   • Mixture 4: $CuHPO_3$ + $MnHPO_3$ (66:33)

When they are not commercial products, the single metallic salts of phosphorous acid can be easily obtained in aqueous solution by reaction of phosphorous acid with an inorganic base such as the hydroxide or carbonate of the desired metal, or by reaction of phosphorous acid with an inorganic base, such as sodium or potassium hydroxide and the subsequent reaction with an inorganic salt, for example, chloride, bromide or sulfate of the desired metal, as described in literature in: "GMelins Handbuch Der Anorganischen Chemie" Ed. Verlag Chemie - GMBH - Weinheim.

The fungicidal compositions according to the present invention can be prepared as follows: the mixtures comprising a copper (II) salt of phosphorous acid and at least another metallic salt of phosphorous acid are obtained by mixing the single salts or by co-precipitation of said salts in the reaction mixture.

In this second case, the co-precipitation of the salts is effected starting from phosphites, for example sodium, potassium phosphite, by the shifting of the metallic cation $M^1$ with a mixture, in aqueous solution, of a copper (II) salt and the other desired metallic salt, according to scheme A:

   Scheme A              $(p+q)M^1_2HPO_3 + pCuX + qM^2X^1 \rightarrow Cu_pM^2_q(HPO_3)_{(p+q)} + M^1_{2(p+q)}X_pX^1_q$

wherein $M^1$ represents a sodium or potassium atom, X represents a halogen, such as chlorine, bromine, iodine or a sulfate group, $X^1$ has the same meaning as X, $M^2$ represents an alkaline earth metal, or a Fe, Mn, Zn, Ni, Al, Ti atom; p is a number greater than 0 and lower than 100 and q is equal to 100-p.

Analogously mixtures comprising, in addition to copper, two or more metals selected from those listed above, can be prepared.

The fungicidal compositions according to the present invention consisting of a copper (II) salt of phosphorous mixed with at least one salt of an alkaline earth metal, or a salt of Fe, Mn, Zn, Ni, Al, Ti, of phosphorous acid have a high fungicidal activity with respect to numerous fungal species.

A further object of the present invention therefore relates to the use of a composition consisting of mixtures comprising a copper (II) salt of phosphorous acid and at least another metallic salt of phosphorous acid selected from a salt of an alkaline earth metal or a salt of Fe, Mn, Zn, Ni, Al or Ti, phytopathogenic fungi.

An object of the present invention also relates to a method for the control of phytopathogenic fungi in agricultural crops by the application of a fungicidal composition consisting of a copper (II) salt of phosphorous acid and at least another metallic salt of phosphorous acid selected from salt of an alkaline earth metal or a salt of Fe, Mn, Zn, Ni, Al or Ti.

Examples of pathogens controlled by the above compositions, together with examples of the application crops, are listed hereunder for purely illustrative and non-limiting purposes:

*Plasmopara viticola* (vines);
*Phytophtora infestans* (tomatoes, potatoes)
*Phytophtora nicotianae* (tobacco, ornamental plants);
*Phytophtora palmivora* (cacao);
*Phytophtora cinnamomi* (pineapples, citrus fruit);
*Phytophtora capsici* (peppers, tomatoes, cucurbits);
*Phytaphtora cryptogea* (tomatoes, plums, ornamental plants);
*Phytophtora megasperma* (ornamental plants);
*Phytophtora citri* (citrus fruit);
*Peronospora tabacina* (tabacco);
*Pseudoperonospora cubensis* (cauliflowers, cucurbits);
*Pseudoperonospora umili* (hops)
*Phytophtora cactorum* (fruit trees);
*Phytophtora destructor* (onions);
*Phytophtora fragarie* (strawberries) ;
*Bremia* (salad).

The compositions, object of the present invention are capable of exerting a high synergistic fungicidal activity allowing preventive, protective, prophylactic, systemic, curative and de-rooting treatment to be effected.

In the above compositions, the copper (II) salt of phosphorous acid and the other metallic salts of phosphorous acid are present in a ratio varying from 10/90 to 90/10 in equivalent phosphorous acid.

Even more preferably, the copper (II) salt of phosphorous acid and the other metallic salts of phosphorous acid are present in a ratio of 50/50 in equivalent phosphorous acid.

The compositions, object of the present invention, can be used in different quantities in relation to the crop, pathogen, environmental conditions and type of formulation adopted.

The fungicidal compositions according to the present invention generally envisage the following application dosages per hectare:

- 1,000-4,000 g of salts of phosphorous acid.

The application of the compositions, object of the present invention, can be effected on all parts of the plant, for example on the leaves, stems, branches and roots, or on the seeds themselves before sowing, or on the ground in which the plant grows.

The compositions according to the present invention can be used in agronomical practice in various forms, such as for example: dry powders, wettable powders, emulsifying concentrates, micro-emulsions, pastes, granulates, solutions, suspensions, etc.. The choice of the type of composition will depend on the specific use.

The compositions are prepared in the known way, for example by diluting or dissolving the active substance with a solvent medium and/or a solid diluent, possibly in the presence of surface-active agents.

Solid diluents or supports which can be used are: silica, kaolin, bentonite, talc, infusorial earth, dolomite, calcium carbonate, magnesia, gypsum, clays, synthetic silicates, attapulgite, sepiolite.

Liquid diluents which can be used, are for example, in addition to water, aromatic compounds (xylols or blends of alkylbenzols), paraffins (petroleum fractions), alcohols (methanol, propanol, butanol, octanol, glycerine), amines, amides (N,N-dimethylformamide, N-methylpyrrolidone), ketones (cyclohexanone, acetone, acetophenone, isophorone, ethylamylketone), fatty acids (for example, vegetable oils such as rape oil, sunflower oil), esters (isobutyl acetate, methyl esters of fatty acids obtained for example from the transesterification of vegetable oils).

Sodium salts, calcium salts, triethanolamine or triethylamine of alkylsulfonates, alkylaryl sulphonates, polyethoxylated alkylphenols, fatty alcohols condensed with ethylene oxide, polyethoxylated fatty acids, polyethoxylated esters of sorbitol, ligninsulphonates, can be used as surface-active agents.

The compositions can also contain special additives for particular purposes, such as for example, adhesive agents, such as gum Arabic, polyvinyl alcohol, polyvinyl pyrrolidone.

In the fungicidal compositions, object of the present invention, the concentration of active substances varies from 0.1% to 98% by weight, preferably from 0.5% to 90% by weight.

When desired, other compatible active principles can be added to the compositions, object of the present invention, such as, for example, phyto-regulators, antibiotics, herbicides, insecticides, fertilizers.

The following examples are provided for purely illustrative and non-limiting purposes of the present invention.

Example 1:

**Preparation of the copper and calcium salt of phosphorous acid (50:50) . Mixture 1.**

350 g of $H_3PO_3$ and 350 ml of $H_2O$ are charged into a 6 l flask. 563.5 g of KOH dissolved in 700 ml of $H_2O$ and previously cooled to about 30°C are added dropwise under stirring on an ice bath. After a few minutes, the aqueous solution obtained by dissolution of 364 g of $CuCl_2*2H_2O$ and 313.95 g of $CaCl_2*2H_2O$ in 3500 ml of $H_2O$ is added dropwise. The blue-green precipitate which is formed is left under stirring for 24 hours at room temperature, the flask is then heated bringing the internal temperature to about 80°C and the mixture is left under stirring for a further 4 hours approximately. The hot mixture is filtered on a Buchner funnel and the solid is washed with 3500 ml of $H_2O$ previously heated to about 80°C. After drying in an oven, 652 g of the desired product are obtained.
Elemental analysis [% found (theoretical)]=
Cu 20.9 (21.2); Ca 13.0 (13.4); P 20.5 (20.7).

Example 2:

**Preparation of the copper and zinc salt of phosphorous acid (50:50). Mixture 2.**

350 g of $H_3PO_3$ and 350 ml of $H_2O$ are charged into a 6 l flask. 563.5 g of KOH dissolved in 700 ml of $H_2O$ and previously cooled to about 30°C are added dropwise under stirring on an ice bath. After a few minutes, the aqueous solution obtained by dissolution of 364 g of $CuCl_2*2H_2O$ and 613.9 g of $ZnSO_4*7H_2O$ in 3500 ml of $H_2O$ is added dropwise. The blue precipitate which is formed is left under stirring for 24 hours at room temperature, the flask is then heated bringing the internal temperature to about 80°C and the mixture is left under stirring for a further 4 hours approximately. The hot mixture is filtered on a Buchner funnel and the solid is washed with 3500 ml of $H_2O$ previously heated to about 80°C. After drying in an oven, 699 g of the desired product are obtained.
Elemental analysis [% found (theoretical)]=
Cu 18.6 (21.2); Zn 16.6 (13.4); P 18.4 (20.7); K 4.18 (0).

Example 3:

**Preparation of the copper and manganese salt of phosphorous acid (50:50). Mixture 3.**

350 g of $H_3PO_3$ and 350 ml of $H_2O$ are charged into a 6 l flask. 563.5 g of KOH dissolved in 700 ml of $H_2O$ and previously cooled to about 30°C are added dropwise under stirring on an ice bath. After a few minutes, the aqueous solution obtained by dissolution of 364 g of $CuCl_2*2H_2O$ and 360.86 g of $MnSO_4*H_2O$ in 3500 ml of $H_2O$ is added dropwise. The blue precipitate which is formed is left under stirring for 24 hours at room temperature, the flask is then heated bringing the internal temperature to about 80°C and the mixture is left under stirring for a further 4 hours approximately. The hot mixture is filtered on a Buchner funnel and the solid is washed with 3500 ml of $H_2O$ previously heated to about 80°C. After drying in an oven, 451.7 g of the desired product are obtained.
Elemental analysis [% found (theoretical)]=
Cu 20.3 (21.4); Mn 16.8 (18.5); P 20.0 (20.9); K 1.49 (0).

Example 4:

**Preparation of the copper and manganese salt of phosphorous acid (66:33). Mixture 4.**

350 g of $H_3PO_3$ and 350 ml of $H_2O$ are charged into a 6 1 flask. 563.5 g of KOH dissolved in 700 ml of $H_2O$ and previously cooled to about 30°C are added dropwise under stirring on an ice bath. After a few minutes, the aqueous solution obtained by dissolution of 480.4 g of $CuCl_2*2H_2O$ and 238.2 g of $MnSO_4*H_2O$ in 3500 ml of $H_2O$ is added dropwise. The blue precipitate which is formed is left under stirring for 24 hours at room temperature, the flask is then heated bringing the internal temperature to about 80°C and the mixture is left under stirring for a further 4 hours approximately. The hot mixture is filtered on a Buchner funnel and the solid is washed with 3500 ml of $H_2O$ previously heated to about 80°C. After drying in an oven, 482 g of the desired product are obtained.
Elemental analysis [% found (theoretical)]=
Cu 27.7 (28.2); Mn 10.9 (12.2); P 18.0 (20.9); K 0.97 (0).
The following mixtures can be obtained with an analogous procedure:

- Mixture 5: $CuHPO_3$ + $ZnHPO_3$ (34:66) *
- Mixture 6: $CuHPO_3$ + $ZnHPO_3$ (66:34)*
- Mixture 7: $CuHPO_3$ + $ZnHPO_3$ (25:75)*
- Mixture 8: $CuHPO_3$ + $ZnHPO_3$ (75:25)*
- Mixture 9: $CuHPO_3$ + $ZnHPO_3$ (90:10)*
- Mixture 10: $CuHPO_3$ + $ZnHPO_3$ (10:90)*
- Mixture 11: $CuHPO_3$ + $CaHPO_3$ (34:66)*
- Mixture 12: $CuHPO_3$ + $CaHPO_3$ (66:34)*
- Mixture 13: $CuHPO_3$ + $CaHPO_3$ (25:75)*
- Mixture 14: $CuHPO_3$ + $CaHPO_3$ (75:25)*
- Mixture 15: $CuHPO_3$ + $CaHPO_3$ (90:10)*
- Mixture 16: $CuHPO_3$ + $CaHPO_3$ (10:90)*
- Mixture 17: $CuHPO_3$ + $MnHPO_3$ (34:66)*
- Mixture 18: $CuHPO_3$ + $MnHPO_3$ (25:75)*
- Mixture 19: $CuHPO_3$ + $MnHPO_3$ (75:25)*
- Mixture 20: $CuHPO_3$ + $MnHPO_3$ (90:10)*
- Mixture 21: $CuHPO_3$ + $MnHPO_3$ (10:90)*
- Mixture 22: $CuHPO_3$ + $Al_2(HPO_3)_3$ (50:50)*
- Mixture 23: $CuHPO_3$ + $Al_2(HPO_3)_3$ (34:66)*
- Mixture 24: $CuHPO_3$ + $Al_2(HPO_3)_3$ (66:34)*
- Mixture 25: $CuHPO_3$ + $Al_2(HPO_3)_3$ (25:75)*
- Mixture 26: $CuHPO_3$ + $Al_2(HPO_3)_3$ (75:25)*
- Mixture 27: $CuHPO_3$ + $Al_2(HPO_3)_3$ (90:10)*
- Mixture 28: $CuHPO_3$ + $Al_2(HPO_3)_3$ (10:90)*
- Mixture 29: $CuHPO_3$ + $Fe_2(HPO_3)_3$ (50:50)*
- Mixture 30: $CuHPO_3$ + $Fe_2(HPO_3)_3$ (34:66)*
- Mixture 31: $CuHPO_3$ + $Fe_2(HPO_3)_3$ (66:34)*
- Mixture 32: $CuHPO_3$ + $Fe_2(HPO_3)_3$ (25:75)*
- Mixture 33: $CuHPO_3$ + $Fe_2(HPO_3)_3$ (75:25)*
- Mixture 34: $CuHPO_3$ + $Fe_2(HPO_3)_3$ (90:10)*
- Mixture 35: $CuHPO_3$ + $Fe_2(HPO_3)_3$ (10:90)*
- Mixture 36: $CuHPO_3$ + $NiHPO_3$ (50:50)*
- Mixture 37: $CuHPO_3$ + $NiHPO_3$ (34:66)*
- Mixture 38: $CuHPO_3$ + $NiHPO_3$ (66:34)*
- Mixture 39: $CuHPO_3$ + $NiHPO_3$ (25:75)*
- Mixture 40: $CuHPO_3$ + $NiHPO_3$ (75:25)*
- Mixture 41: $CuHPO_3$ + $NiHPO_3$ (90:10) *
- Mixture 42: $CuHPO_3$ + $NiHPO_3$ (10:90)*
- Mixture 43: $CuHPO_3$ + $MgHPO_3$ (50:50)*
- Mixture 44: $CuHPO_3$ + $MgHPO_3$ (34:66)*
- Mixture 45: $CuHPO_3$ + $MgHPO_3$ (66:34)*
- Mixture 46: $CuHPO_3$ + $MgHPO_3$ (25:75)*
- Mixture 47: $CuHPO_3$ + $MgHPO_3$ (75:25)*

- Mixture 48: $CuHPO_3$ + $MgHPO_3$ (90:10)*
- Mixture 49: $CuHPO_3$ + $MgHPO_3$ (10:90)*
- Mixture 50: $CuHPO_3$ + $BaHPO_3$ (50:50)*
- Mixture 51: $CuHPO_3$ + $BaHPO_3$ (34:66)*
- Mixture 52: $CuHPO_3$ + $BaHPO_3$ (66:34)*
- Mixture 53: $CuHPO_3$ + $BaHPO_3$ (25:75)*
- Mixture 54: $CuHPO_3$ + $BaHPO_3$ (75:25)*
- Mixture 55: $CuHPO_3$ + $BaHPO_3$ (90:10)*
- Mixture 56: $CuHPO_3$ + $BaHPO_3$ (10:90)*
- Mixture 57: $CuHPO_3$ + $Ti(HPO_3)_2$ (50:50)*
- Mixture 58: $CuHPO_3$ + $Ti(HPO_3)_2$ (34:66)*
- Mixture 59: $CuHPO_3$ + $Ti(HPO_3)_2$ (66:34)*
- Mixture 60: $CuHPO_3$ + $Ti(HPO_3)_2$ (25:75)*
- Mixture 61: $CuHPO_3$ + $Ti(HPO_3)_2$ (75:25)*
- Mixture 62: $CuHPO_3$ + $Ti(HPO_3)_2$ (90:10)*
- Mixture 63 $CuHPO_3$ + $Ti(HPO_3)_2$ (10:90)*
- Mixture 64:$CuHPO_3$ + $CaHPO_3$ + $MnHPO_3$(34:33:33)*
- Mixture 65: $CuHPO_3$ + $CaHPO_3$ + $MnHPO_3$(50:25:25)*
- Mixture 66:$CuHPO_3$ + $CaHPO_3$ + $ZnHPO_3$(34:33:33)*
- Mixture 67: $CuHPO_3$ + $CaHPO_3$ + $ZnHPO_3$(50:25:25)*
- Mixture 68: $CuHPO_3$ + $ZnHPO_3$ + $MnHPO_3$(34:33:33)*
- Mixture 69: $CuHPO_3$ + $ZnHPO_3$ + $MnHPO_3$(50:25:25)*

*: reciprocal proportions expressed in equivalent phosphorous acid.

Example 5

Efficacy of the fungicidal compositions, object of the present invention, in the control of <u>Plasmopara viticola</u> on vines in preventive leaf application.

Table 1

Leaves of cultivar Merlot vines, grown in vases, in a conditioned environment ($20\pm1$°C, 70% relative humidity) are treated by spraying both sides of the leaves with the mixtures under examination dispersed in an aqueous solution containing a 0.3% of tween 20.

After remaining 7 days in a conditioned environment, the plants are infected on the lower side with an aqueous suspension of spores of *Plasmopara viticola* (200,000 spores per $cm^3$).

The plants are kept in a humidity saturated environment, at 21°C, for the incubation period of the fungus and, at the end of this period (7 days), the fungicidal activity is evaluated according to an evaluation percentage scale from 100 (healthy plant) to 0 (completely infected plant).

From the data indicated in table 1, it is possible to verify the synergistic effect of the mixtures, consisting of the mixtures being examined, compared with the expected efficacy using the Limpel formula ("Pesticide Science" (1987), vol. 19, pages 309-315):

$$E = x + y - (xy / 100)$$

wherein:

- E is the fungicidal activity expected, in the absence of synergistic effects, from a mixture obtained by mixing g.x of compound x with g.<u>y</u> of compound Y;
- x is the activity of compound x when used alone with a dosage of g.<u>x</u>;
- y is the activity of compound Y when used alone with a dosage of g. <u>y</u>.

When the fungicidal activity found experimentally is greater than the value of E, this activity is considered synergistic.

Table 1

| 7-day preventive activity on *Plasmopara viticola*, with leaf application on vines, of mixtures (50:50)* of copper (II) salt of phosphorous acid (CuHPO$_3$), which at 500 ppm** (g.$\underline{x}$) is 88 (x) with other metallic salts of phosphorous acid. | | | | | |
|---|---|---|---|---|---|
| Mixture | Dose ppm** (g.$\underline{y}$) | Activity (y) | Activity Mixture according to Limpel (E) | Experimental activity of mixture | Synergy factor |
| CaHPO$_3$ | 500 | 0 | 88 | 100 | 1.14 |
| ZnHPO$_3$ | 500 | 25 | 91 | 100 | 1.10 |
| MnHPO3 | 500 | 0 | 88 | 98 | 1.11 |
| * reciprocal proportions expressed in equivalent phosphorous acid.<br>** the doses in ppm refer to the quantity of equivalent phosphorous acid. | | | | | |

Example 6

**Efficacy of the fungicidal compositions, object of the present invention, in the control of <u>Phytophthora infes</u>tans on potato plants in preventive leaf application. Table 2.**

Leaves of potato plants, of the Primura variety, grown in vases, in a conditioned environment (20$\pm$1°C, 70% relative humidity) are treated by spraying both sides of the leaves with the mixtures under examination dispersed in an aqueous solution containing 0.3% of tween 20.

After remaining 7 days in a conditioned environment, the plants are infected on the lower side with an aqueous suspension of spores of *Phytophthora infestans* (100,000 spores per cm$^3$).

The plants are kept in a humidity saturated environment, at 18-24°C, for the incubation period of the fungus and, at the end of this period (7 days), the fungicidal activity is evaluated according to an evaluation percentage scale from 100 (healthy plant) to 0 (completely infected plant).

From the data indicated in table 2, it is possible to verify the synergic effect of the mixtures, consisting of the mixtures being examined, compared with the expected efficacy using the Limpel formula.

Table 2

| 7-day preventive activity on *Phytophthora infestans*, with leaf application on potato plants, of mixtures (50:50)* of copper (II) salt of phosphorous acid (CuHPO$_3$), which at 750 ppm** (g.$\underline{x}$) is 12 (x) with other metallic salts of phosphorous acid. | | | | | |
|---|---|---|---|---|---|
| Mixture | Dose ppm** (g, $\underline{y}$) | Activity (y) | Activity Mixture according to Limpel (E) | Experimental activity of mixture | Synergy factor |
| CaHPO$_3$ | 750 | 10 | 18.8 | 78 | 4.1 |
| ZnHPO$_3$ | 750 | 5 | 16.4 | 70 | 4.2 |
| MnHPO3 | 750 | 15 | 25.2 | 80 | 3.2 |
| * reciprocal proportions expressed in equivalent phosphorous acid.<br>** the doses in ppm refer to the quantity of equivalent phosphorous acid. | | | | | |

**Claims**

1.    A synergistic fungicidal composition consisting of a copper (II) salt of phosphorous acid and at least another metallic salt of phosphorous acid selected from a salt of an alkaline earth metal, or a salt of Fe, Mn, Zn, Ni, Al or Ti, wherein the copper (II) salt and the other metallic salts are present in a ratio ranging from 10/90 to 90/10 in equivalent phosphorous acid.

2.    The fungicidal composition according to claim 1, **characterized in that** the metallic salt of phosphorous acid is a mono- or di-basic salt, or a mixture of these in any proportion.

3. The fungicidal composition according to claim 1, **characterized in that** the copper (II) salt of phosphorous acid and the other metallic salts of phosphorous acid are present in a 50/50 ratio in equivalent phosphorous acid.

4. The fungicidal composition according to claim 1, **characterized in that** the concentration of the copper (II) salt of phosphorous acid, and the other metallic salts of phosphorous acid
ranges from 0.1% to 98% by weight, preferably from 0.5% to 90% by weight.

5. The fungicidal composition according to claim 1, **characterized in that** it consists of a mixture selected from:

   • Mixture 1: $CuHPO_3$ + $CaHPO_3$ (50:50)
   • Mixture 2: $CuHPO_3$ + $ZnHPO_3$ (50:50)
   • Mixture 3: $CuHPO_3$ + $MnHPO_3$ (50:50)
   • Mixture 4: $CuHPO_3$ + $MnHPO_3$ (66:33)

6. The use of a fungicidal composition consisting of a copper (II) salt of phosphorous acid and at least another metallic salt of phosphorous acid selected from a salt of an alkaline earth metal or a salt of Fe, Mn, Zn, Ni, Al or Ti, wherein the copper (II) salt and the other metallic salts are present in a ratio ranging from 10/90 to 90/10 in equivalent phosphorous acid, for the control of phytopathogenic fungi.

7. Use according to claim 6, **characterized in that** the phytopathogens are: _Plasmopara viticola_ (vines); _Phytophtora infestans_ (tomatoes, potatoes);_Phytophtora nicotianae_ (tobacco, ornamental plants);_Phytophtora palmivora_ (cacao); _Phytophtora cinnamomi_ (pineapples, citrus fruit); _Phytophtora capsici_ (peppers, tomatoes, cucurbits); _Phytophtora cryptogea_ (tomatoes, plums, ornamental plants); _Phytophtora megasperma_ (ornamental plants); _Phytophtora citri_ (citrus fruit); _Peronospora tabacina_ (tabacco); _Pseudoperonospora cubensis_ (cauliflowers, cucurbits); _Pseudoperonospora umili_ (hops); _Phytophtora cactorum_ (fruit trees); _Phytophtora destructor_ (onions); _Phytophtora fragarie_ (strawberries); _Bremia_ (salad).

8. A method for the control of phytopathogenic fungi in agricultural crops by the application of a fungicidal composition according to one of the claims 1-5

9. The method according to claim 8, **characterized in that** the fungicidal composition has an application dosage per hectare ranging from 1000 to 4000 g of salts of phosphorous acid.

10. The method according to claim 8, **characterized in that** the application is effected on all parts of the plant, for example on the leaves, stems, branches and roots, or on the seeds themselves before sowing, or on the ground in which the plant grows.

11. The method according to claim 8, **characterized in that** the application is effected for preventive, protective, prophylactic, systemic, curative and eradicant treatment.

**Patentansprüche**

1. Synergistische fungizide Zusammensetzung bestehend aus einem Kupfer(II)salz von Phosphonsäure und mindestens einem anderen Metallsalz von Phosphonsäure, ausgewählt aus einem Salz eines Erdalkalimetalls oder einem Salz von Fe, Mn, Zn, Ni, Al oder Ti, wobei das Kupfer(II)salz und die anderen Metallsalze in einem Verhältnis zwischen 10/90 und 90/10 äquivalenter Phosphonsäure vorhanden sind.

2. Fungizide Zusammensetzung nach Anspruch 1, **dadurch gekennzeichnet, dass** das Metallsalz von Phosphonsäure ein mono— oder dibasisches Salz oder eine Mischung derselben in beliebigem Verhältnis ist.

3. Fungizide Zusammensetzung nach Anspruch 1, **dadurch gekennzeichnet, dass** das Kupfer(II)salz von Phosphonsäure und die anderen Metallsalze von Phosphonsäure in einem Verhältnis von 50/50 äquivalenter Phosphonsäure vorhanden sind.

4. Fungizide Zusammensetzung nach Anspruch 1, **dadurch gekennzeichnet, dass** die Konzentration des Kupfer(II) salzes von Phosphonsäure und der anderen Metallsalze von Phosphonsäure zwischen 0,1 und 98 Gewichtsprozent, vorzugsweise zwischen 0,5 und 90 Gewichtsprozent liegt.

5. Fungizide Zusammensetzung nach Anspruch 1, **dadurch gekennzeichnet, dass** sie aus einer Mischung besteht, ausgewählt aus:

- Mischung 1: $CuHPO_3$ + $CaHPO_3$ (50:50)
- Mischung 2: $CuHPO_3$ + $ZnHPO_3$ (50:50)
- Mischung 3: $CuHPO_3$ + $MnHPO_3$ (50:50)
- Mischung 4: $CuHPO_3$ + $MnHPO_3$ (66:33)

6. Verwendung einer fungiziden Zusammensetzung bestehend aus einem Kupfer(II)salz von Phosphonsäure und mindestens einem anderen Metallsalz von Phosphonsäure, ausgewählt aus einem Salz eines Erdalkalimetalls oder einem Salz von Fe, Mn, Zn, Ni, Al oder Ti, wobei das Kupfer(II)salz und die anderen Metallsalze in einem Verhältnis zwischen 10/90 und 90/10 äquivalenter Phosphonsäure zur Bekämpfung von phytopathogenen Pilzen vorhanden sind.

7. Verwendung nach Anspruch 6, **dadurch gekennzeichnet, dass** die Phytopathogene folgende sind: _Plasmopara viticola (Reben); Phytophtora infestans (Tomaten, Kartoffeln); Phytophtora nicotianae (Tabak, Zierpflanzen); Phytophtora palmivora (Kakao); Phytophtora cinnamomi (Ananas, Zitrusfrüchte); Phytophtora capsici (Paprika, Tomaten, Kürbisgewächse); Phytophtora cryptogea (Tomaten, Pflaumen, Zierpflanzen); Phytophtora megasperma (Zierpflanzen); Phytophtora citri (Zitrusfrüchte); Peronospora tabacina (Tabak); Pseudoperonospora cubensis (Blumenkohl, Kürbisgewächse); Pseudoperonospora umili (Hopfen); Phytophtora cactorum (Obstbäume); Phytophtora destructor (Zwiebeln); Phytophtora fragarie (Erdbeeren); Bremia (Salat)._

8. Verfahren zur Bekämpfung phytopathogener Pilze bei Nutzpflanzen durch Anwendung einer fungiziden Zusammensetzung nach einem der Ansprüche von 1 bis 5.

9. Verfahren nach Anspruch 8, **dadurch gekennzeichnet, dass** die fungizide Zusammensetzung eine Anwendungsdosierung pro Hektar von 1000 bis 4000 g Salz von Phosphonsäure besitzt.

10. Verfahren nach Anspruch 8, **dadurch gekennzeichnet, dass** die Anwendung auf alle Teile der Pflanze, beispielsweise Blätter, Stängel, Zweige und Wurzeln, oder auf die Samen vor der Aussaat oder auf die Erde, in der die Pflanzen wachsen, durchgeführt wird.

11. Verfahren nach Anspruch 8, **dadurch gekennzeichnet, dass** die Anwendung zur präventiven, protektiven, prophylaktischen, systemischen, kurativen und bekämpfenden Behandlung durchgeführt wird.

## Revendications

1. Composition fongicide synergique comprenant un sel de cuivre (II) d'acide phosphoreux et au moins un autre sel métallique d'acide phosphoreux sélectionné parmi un sel d'un métal alcalino-terreux ou un sel de Fe, Mn, Zn, Ni, Al ou Ti, dans laquelle le sel de cuivre (II) et les autres sels métalliques sont présents dans un rapport dans la plage de 10/90 à 90/10 en acide phosphoreux équivalent.

2. Composition fongicide selon la revendication 1, **caractérisée en ce que** le sel métallique d'acide phosphoreux est un sel monobasique ou dibasique, ou un mélange de ceux-ci dans une quelconque proportion.

3. Composition fongicide selon la revendication 1, **caractérisée en ce que** le sel de cuivre (II) d'acide phosphoreux et les autres sels métalliques d'acide phosphoreux sont présents dans un rapport de 50/50 en acide phosphoreux équivalent.

4. Composition fongicide selon la revendication 1, **caractérisée en ce que** la concentration du sel de cuivre (II) d'acide phosphoreux et les autres sels métalliques d'acide phosphoreux est dans la plage de 0,1% à 98% en poids, de préférence de 0,5% à 90% en poids.

5. Composition fongicide selon la revendication 1, **caractérisée en ce qu'**elle comprend un mélange sélectionné parmi :

- Mélange 1 : $CuHPO_3$ + $CaHPO_3$ (50:50)
- Mélange 2 : $CuHPO_3$ + $ZnHPO_3$ (50:50)

• Mélange 3 : $CuHPO_3$ + $MnHPO_3$ (50:50)
• Mélange 4 : $CuHPO_3$ + $MnHPO_3$ (66:33)

6. Utilisation d'une composition fongicide comprenant un sel de cuivre (II) d'acide phosphoreux et au moins un autre sel métallique d'acide phosphoreux sélectionné parmi un sel d'un métal alcalino-terreux ou un sel de Fe, Mn, Zn, Ni, Al ou Ti, dans laquelle le sel de cuivre (II) et les autres sels métalliques sont présents dans un rapport dans la plage de 10/90 à 90/10 en acide phosphoreux équivalent pour la lutte contre les champignons phytopathogènes.

7. Utilisation selon la revendication 6, **caractérisée en ce que** les phytopathogènes *sont : Plasmopara viticola* (*vignes*) ; *Phytophtora infestans* (tomates, pommes de terre); *Phytophtora nicotianae* (tabac, plantes *ornementales) ; Phytophtora palmivora* (cacao); *Phytophtora cinnamoni* (ananas, agrumes) ; *Phytophtora capsici* (piments, tomates, cucurbitacées) ; *Phytophtora cryptogea* (tomates, prunes, plantes ornementales); *Phytophtora megasperma* (plantes ornementales) ; *Phytophtora citri* (agrumes) ; *Peronospora tabacina* (tabac) ; *Pseudoperonospora cubensis* (choux-fleurs, cucurbitacées) ; *Pseudoperonospora umili* (houblon) ; *Phytophtora cactorum* (arbres fruitiers) ; *Phytophtora destructor* (oignons) ; *Phytophtora fragarie* (fraises) ; *Bremia* (salade).

8. Procédé de lutte contre les champignons phytopathogènes dans des cultures agricoles par l'application d'une composition fongicide selon l'une des revendications 1 à 5.

9. Procédé selon la revendication 8, **caractérisé en ce que** la composition fongicide a un dosage d'application par hectare dans la plage de 1000 à 4000 g de sels d'acide phosphoreux.

10. Procédé selon la revendication 8, **caractérisé en ce que** l'application est effectuée sur toutes les parties de la plante, par exemple sur les feuilles, les tiges, les branches et les racines, ou sur les semences avant l'ensemencement, ou sur le sol dans lequel la plante pousse.

11. Procédé selon la revendication 8, **caractérisé en ce que** l'application est effectuée pour un traitement préventif, protecteur, prophylactique, systémique, curatif et d'éradication.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4075324 A

- EP 0230209 A

**Non-patent literature cited in the description**

- *Pesticide Science,* 1987, vol. 19, 309-315